# EUROPEAN PATENT APPLICATION

(11) **EP 2 239 659 A1**
(43) Date of publication of application: **13.10.2010**
(21) Application number: 10158977.8
(22) Date of filing: 01.04.2010
(51) Int. Cl.: G06F 9/445

(54) **A network device and a system thereof**

(30) Priority: 09.04.2009 IN KO06092009
(71) Applicant: Siemens Aktiengesellschaft, 80333 München (DE)
(72) Inventor: Uppunda, Prashanth, 560078 Bangalore (IN)

(57) **Abstract**

The invention provides a simple system for installation of the firmware and/or configuration files. The invention introduces a network device (10), having a second module (30) to enable the installation of the firmware and/or configuration files in a plurality of network devices (210, 220, 230, 240, 250) based on information received on the plurality of network devices (210, 220, 230, 240, 250) in the network 205 by a first module 20 of said network device 10. The invention also explains a system 200 for the use of such an installation. The system 200 introduces a facility to have the discovery of network devices (210, 220, 230, 240, and 250) and to have a configuration/firmware update for multiple devices together from a web application running within the network device 10.

## Description

The present invention relates to networking systems for communication in industry, particularly network device and system for installation of firmware and/or configuration files in a network.

In an industrial networking environment, there will be several network devices such as wireless access points, switches, routers, gateways etc. These devices need to be updated with latest firmware and/or configuration file frequently to keep the network functioning properly with latest features available for the devices in the network.

It is quite normal that, multiple devices of similar types need to be updated with a same firmware and/or a same configuration file. One of the options to update firmware/configuration is to manually access the web page of each device and do the necessary updates. But this will be a too much time consuming task if there are several hundred's of devices. To avoid this, normally a PC (personal computer) based application is written, which will do the installation or update of firmware or configuration of multiple devices in the network. But this needs a special program and that program runs from a dedicated PC. It is an unnecessary overhead to have a special program on a dedicated PC.

It is an object of the present invention to provide a simple system for installation of the firmware and/or configuration files in multiple network devices in a network.

The said object is achieved by providing a network device according to claim 1 and by a system according to claim 7.

The underlying idea is to use a network device, having a second module to enable the installation of the firmware and/or configuration files in a plurality of network devices based on information received on the plurality of network devices in the network by a first module of said network device. Using this, a user who wishes to do bulk installations of firmware/configuration just have to connect to the network device using a web page generated by a third module of the network device provided for controlling the installations. This web page facilitates any web enabled client device to access the specified network device and do the required installation without much complexity. Also this avoids the need of any complex application at the client device, which otherwise generally would be a dedicated PC.

Since the required functionalities go as part of the network device as its internal firmware, the vendor need not buy special software nor needs a dedicated PC for installation of bulk firmware/configuration of devices. Instead he can have a simple generic client device adapted to access the web page from the network device which helps him to do the installation.

In a preferred embodiment, the received information by the first module includes the information on the type of the device. This enables the user to understand more about the network device and the type of installation the network device needs. For example, some type of devices need only an installation of some configuration while some others need a firmware upgrade.

In a further preferred embodiment, the received information by the first module includes the current version of the firmware. This enables the user to know about the current version of the firmware, so that he can judiciously select the installation.

In an alternative embodiment, the second module is adapted to be configured to have a time based installation of the firmware and/or configuration files in the plurality of network devices. This enables the user more flexibility to perform the installation. For example an installation can be scheduled on non-peak hours, so that it does not affect the regular business time.

In an alternative embodiment, the location of source files for the installation of the firmware and/or configuration files is indicated using the web page. This enables the user to select the location of the source file, even if the location is local or remote. Thus the webpage enables to have a simple and user-friendly configuration.

In another alternative embodiment, the web page enables selective selection of the network devices in the network for the installation of the firmware and/or configuration files. This provides the user, the flexibility to choose the required network devices that need the installation.

In another alternative embodiment, the client device is a PC or a web enabled mobile devices. Thus, a simple PC or a web enabled device could be used for the installation, avoiding the need of a special dedicated PC for the said application.

The present invention is further described hereinafter with reference to illustrated embodiments shown in the accompanying drawings, in which:
FIG 1 illustrates a block diagram of a network device for installation of the firmware and/or configuration files according to an embodiment of the invention, and
FIG 2 illustrates a block diagram of a system for installation of the firmware and/or configuration files according to an embodiment of the invention.

Many of the network devices, for example access points, switches, routers, gateways run a web server with in them. The idea here is to have a web application which resides inside the network device, and perform the following functionalities:
- Automatic discovery of devices in the network, and providing a list of the same.
- Installation/upgrade of multiple device firmware from a specified path at once. For example the path could be a Trivial File Transport Protocol (TFTP) server path.
- Installation/update of multiple device configurations from a specified path at once. For example this path could also be a TFTP server path.

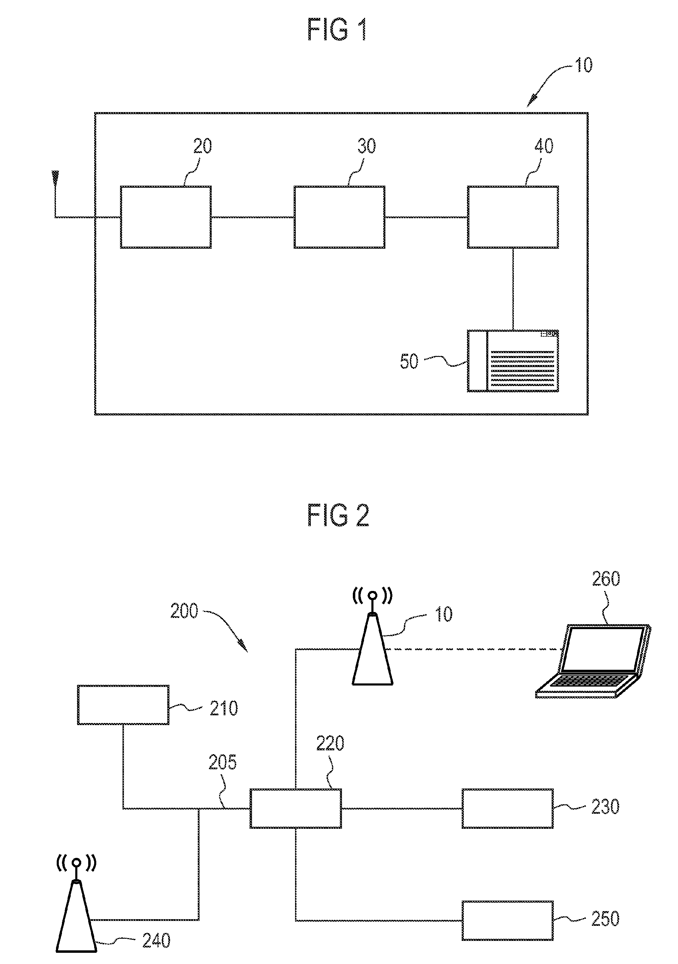

FIG 1 illustrates a block diagram of a network device 10 for installation of the firmware and/or configuration files according to an embodiment of the invention. The network device 10 comprises a first module 20 to automatically receive information on a plurality of network devices in a network. The first module 20 scans through the network using specific protocols to discover the connected devices in the network and also to gather the information on type of devices, version of the installed firmware etc. The discovered information can be used by the user to plan or schedule the required installation.

The network device 10 also has a second module 30, adapted to enable the installation of the firmware and/or configuration files in the plurality of network devices selected by the user, based on said information received. The received information is basically processed by this second module 30. The user input for the installation is also processed by this second module 30. The second module 30 is adapted to be configured to have a time based installation of the firmware and/or configuration files in the plurality of network devices.

The network device 10 also has a third module 40 adapted to generate a web page 50 to remotely control the installation of the firmware and/or configuration files. The user accesses the specific web page 50 generated by the third module 40 typically from a laptop/PC/web enabled mobile device connected to the network. The connection could be wired or wireless. The web page enables the remote installation of the firmware/configuration files.

FIG 2 illustrates a block diagram of a system 200 for installation of the firmware and/or configuration files according to an embodiment of the invention. The system 200 comprises a network device 10 as explained according to FIG 1 in a network 205 of a plurality of network devices (210, 220, 230, 240, 250). According to the requirement, the user can go for a simultaneous installation of a firmware and/or configuration files in all or some of the networking devices (210, 220, 230, 240, 250) based on the requirement.

The system 200 further comprises a client device 260, adapted to access a web page 50 from the network device 10 to control the installation of the firmware/configuration files. The client device 260 could be a PC or a web enabled mobile device. Using the web page 50, the location of source files for the installation of the firmware and/or configuration files can be indicated. The user will be able to see a list of devices discovered by the network device 10 in this web page 50. User selects either all devices or some of the devices according to the requirement.

The user will also be able to select the location from where the firmware/configuration information has to be taken for the installation. The firmware/configuration gets installed in user requested network devices using device specific protocols and the status can be shown to the user though the same web page 50. The location of the source file and the network devices that need to be installed with the firmware/configuration can be selected using the web page 50.

Summarizing, the present invention introduces a network device 10, having a second module 30 to enable the installation of the firmware and/or configuration files in a plurality of network devices (210, 220, 230, 240, 250) based on information received on the plurality of network devices (210, 220, 230, 240, 250) in the network 205 by a first module 20 of said network device 10. The invention also explains a system 200 for the use of such an installation. The system 200 introduces a facility to have the discovery of network devices (210, 220, 230, 240, 250) and to have a configuration/firmware update for multiple devices together from a web application running within the network device 10. Hence the use of third party software could be avoided. This is a more convenient approach, where the user can just connect to the concerned network device 10 through a laptop/PC/web enabled device and simply access the web page 50 to get the installations done.

Although the invention has been described with reference to specific embodiments, this description is not meant to be construed in a limiting sense. Various modifications of the disclosed embodiments, as well as alternate embodiments of the invention, will become apparent to persons skilled in the art upon reference to the description of the invention. It is therefore contemplated that such modifications can be made without departing from the embodiments of the present invention as defined.

## Claims

1. A network device (10), said network device (10) comprising:
- a first module (20) to automatically receive information on a plurality of network devices (210, 220, 230, 240, 250) in the network (205);
- a second module (30) adapted to enable the installation of the firmware and/or configuration files in the plurality of network devices (210, 220, 230, 240, 250) based on said information received; and
- a third module (40) adapted to generate a web page (50) to remotely control the installation of the firmware and/or configuration files.

2. The network device (10) as claimed in claim 1, wherein the received information by the first module (20) includes the information on the type of the plurality of network devices (210, 220, 230, 240, 250).

3. The network device (10) as claimed in claim 1 or 2, wherein the received information by the first module (20) includes the current version of the firmware.

4. The network device (10) as claimed in any of the preceding claims, wherein the second module (30) is adapted to be configured to have a time based installation of the firmware and/or configuration files in the plurality of network devices (210, 220, 230, 240, 250).

5. The network device (10) as claimed in any of the preceding claims, wherein the location of source files for the installation of the firmware and/or configuration files is indicated using the web page (50).

6. The network device (10) as claimed in any of the preceding claims, wherein the web page (50) enables selective selection of the network devices (210, 220, 230, 240, 250) in the network (205) for the installation of the firmware and/or configuration files.

7. A system (200), said system (200) comprising:
- a network device (10) as claimed in any of the claims 1 to 6;
- a network (205) of a plurality of network devices (210, 220, 230, 240, 250) adapted to have a simultaneous installation of a firmware and/or configuration files; and
- a client device (260) adapted to access a web page (50) from the network device (10) to control the installation of the firmware and/or uploading of the configuration files.

8. The system (200) as claimed in claim 7, wherein the client device (260) is a PC.

9. The system (200) as claimed in claim 7 or 8, wherein the client device (260) is a web enabled mobile devices.

10. The system (200) as claimed in any of the claims 7 to 9, wherein the location of source files for the installation of the firmware and/or configuration files is indicated using the web page (50).
